# EUROPEAN PATENT APPLICATION

(11) **EP 2 653 347 A1**
(43) Date of publication of application: **23.10.2013**
(21) Application number: 12164233.4
(22) Date of filing: 16.04.2012
(51) Int. Cl.: B60Q 1/52, B60Q 1/46

(54) **Direction indicator**

(71) Applicant: Volvo Car Corporation, 40 531 Göteborg (SE)
(72) Inventor: Sanell, Patrik, 44933 Nödinge (SE)

(57) **Abstract**

A direction indicator (102) for a stationary vehicle (100) comprises a combination of a headlight (104) and a tailgate (106) of the stationary vehicle. The headlight (104) comprises a plurality of LEDs and the tailgate (106) comprises a plurality of LEDs. The plurality of headlight LEDs and the plurality of tailgate LEDs are illuminated in a predefined sequence for directing oncoming traffic to a safe side of the stationary vehicle.

## Description

### FIELD OF THE INVENTION

The present invention relates to direction indicators for vehicles, and in particular, to a direction indicator for a vehicle that alerts the oncoming traffic.

### BACKGROUND

The tailgate and the brake lights of vehicles are used to alert other drivers that a vehicle has applied brakes, so that they can slow down or stop their vehicles accordingly. There are solutions that disclose the use of a matrix of lights or dedicated lamps installed on the rear side of the vehicle to warn other drivers, for instance, when a crash has occurred. These solutions are automatically activated in the event of a car crash or collision. However, if the vehicle has had a breakdown or an accident or has been stationary for a long time, other drivers may not know the safe side to overtake the vehicle and proceed with their onward journey. Thus, there is a need for a better alerting system which does not require the use of dedicated lamps and can be used to direct other drivers to a safe side of the stationary vehicle.

### SUMMARY OF THE INVENTION

The objective of the invention is to provide an improved direction indicator for a stationary vehicle.

This object is achieved by the direction indicator as set forth in the appended claims.

According to the present invention the direction indicator illuminates light-emitting diodes (LEDs) of the tailgate and headlight of a stationary vehicle in a predefined sequence to direct oncoming traffic to a safe side of the stationary vehicle. Thus, there is no need of additional lighting devices since the already present headlight and tailgate can be used.

According to one aspect of the invention the direction indicator is activated using a combination of a turn-signal switch and a warning-light switch in the stationary vehicle for easy operation by a driver or passenger of the stationary vehicle.

According to another aspect of the invention, the direction indicator is activated using a separate switch provisioned in the stationary vehicle for convenient operation by the driver or passenger of the stationary vehicle.

In a further aspect of the present invention, the direction indicator coordinates with a control unit, wherein the control unit is configured for controlling the operation of the plurality of tailgate LEDs and the plurality of headlight LEDs by generating the predefined sequence for the illumination of the plurality of tailgate LEDs and the plurality of headlight LEDs.

According to yet another aspect of the present invention, the direction indicator is manually activated by the driver or passenger of the stationary vehicle for directing oncoming traffic to a safe side of the stationary vehicle.

According to yet a further aspect of the present invention, the direction indicator is automatically activated in the event of a vehicular accident for alerting oncoming traffic about the stationary vehicle.

Preferably, the headlight LEDs are selected from one of an OLED type and an AMOLED type for a long life and decreasing the power consumption of the headlight.

Preferably, the tailgate LEDs are selected from one of an OLED type and an AMOLED type for a long life and decreasing the power consumption of the tailgate.

### BRIEF DESCRIPTION OF THE DRAWINGS

The invention will now be further disclosed and the advantages of the present invention will become readily apparent to those skilled in the art through the following detailed description of the accompanying drawings.
Figure 1 is a block diagram of a direction indicator, in accordance with an embodiment of the invention.
Figure 2 is a schematic diagram of the headlight and the tailgate of a stationary vehicle, in accordance with an embodiment of the invention.
Figures 3A, 3B and 3C illustrate an exemplary predefined sequence of illumination of headlight LEDs and tailgate LEDs, in accordance with an embodiment of the invention.

### DISCLOSURE OF PREFERRED EMBODIMENTS

The figures are schematic and simplified for clarity and merely show details essential for understanding the invention. Throughout the disclosure the same reference numerals have been used to represent identical or corresponding parts.

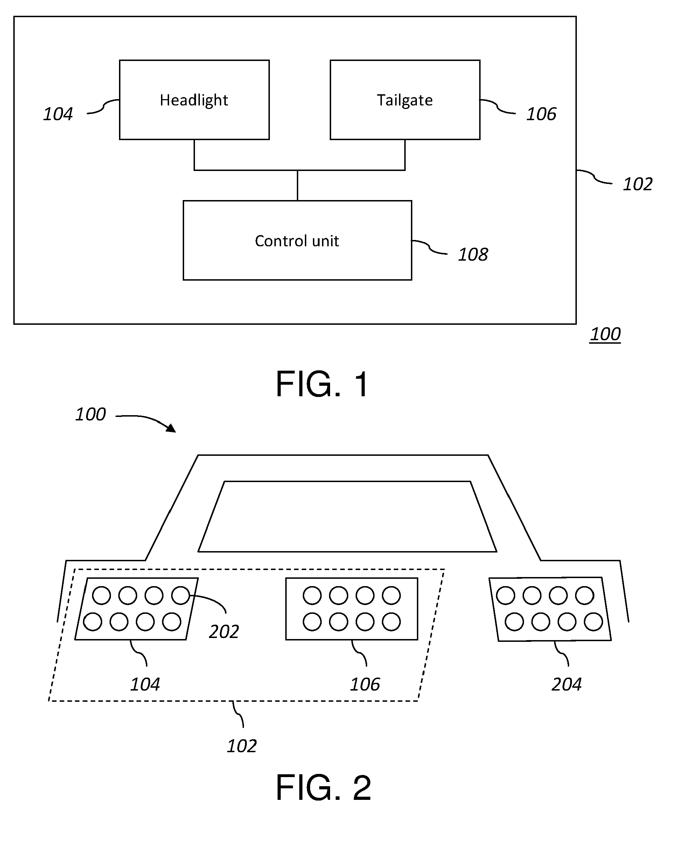

Figure 1 is a block diagram of a direction indicator 102, in accordance with an embodiment of the invention. The direction indicator 102 comprises of a headlight 104, a tailgate 106 and a control unit 108. The control unit 108 is used to control the operation of the headlight 104 and the tailgate 106 of a stationary vehicle 100 by generating a predefined sequence for the illumination of the headlight 104 and the tailgate 106, in accordance with an embodiment of the invention. The predefined sequence is a sequence of the illumination of the headlight 104 and the tailgate 106 that provides visual markers or visual cues to capture the attention of other drivers and accordingly direct oncoming traffic to a safe side of the vehicle.

Typical examples of control unit 108 include a programmed microprocessor, a micro-controller, a peripheral integrated circuit element, and other devices or arrangements of devices that are capable of implementing the logic of the present invention. Further, the control unit 108 also stores computer programs or a set of instructions for the suitable operation of the direction indicator 102. The computer programs or set of instructions may include various commands that instruct the control unit 108 to perform specific tasks such as the steps that constitute the logic for the present invention.

In accordance with an embodiment of the invention, the direction indicator 102 is manually activated by a driver or a passenger of the stationary vehicle. The driver may manually activate the direction indicator 102 in the event of a vehicular breakdown or a collision or an accident. The driver may also manually activate the direction indicator 102 if he or she has to park the vehicle on the road due to some other urgency. The direction indicator 102 may be activated using a separate switch provisioned on the vehicle. Further, the direction indicator 102 may also be activated using a combination of switches present in the vehicle such as a combination of a turn-signal switch and a warning-light switch.

In accordance with another embodiment of the invention, the direction indicator 102 is automatically activated in the event of a vehicular accident etc. In such a scenario, the control unit 108 may be configured to co-ordinate with a central microprocessor (not shown in the figure) of the vehicle. The central microprocessor signals the control unit 108 that a vehicular accident has occurred, thereby enabling the control unit 108 to automatically activate the direction indicator 102.

It may be apparent to any person skilled in the art that the control unit 108 is also used to illuminate the headlight 104 and the tailgate 106 according to the normal braking operation and other operations associated with a vehicle.

Figure 2 is a schematic diagram of the headlight 104 and tailgate 106 of a stationary vehicle 100 in accordance with an embodiment of the invention. The headlight 104 comprises a plurality of light-emitting diodes 202, hereinafter referred to as plurality of headlight LEDs. The plurality of headlight LEDs may be arranged in a rectangular array or in the form of a 'right arrow' or a cleft arrow' or any other suitable arrangement. Similarly, the tailgate 106 also comprises a plurality of LEDs, hereinafter referred to as plurality of tailgate LEDs. The plurality of tailgate LEDs may be arranged in a rectangular array or in the form of a 'right arrow' or a cleft arrow' or any other suitable arrangement.

As described earlier, the direction indicator 102 comprises the headlight 104 and the tailgate 106 of the stationary vehicle 100, and the control unit 108 (not shown in Fig. 2). The control unit 108 controls the operation of the plurality of headlight LEDs and the plurality of tailgate LEDs.

In accordance with an embodiment of the invention, the control unit 108 generates the predefined sequence for illuminating the plurality of headlight LEDs and the plurality of tailgate LEDs.

In accordance with another embodiment of the invention, the control unit 108 generates the predefined sequence for illuminating a subset of the plurality of headlight LEDs and a subset of the plurality of tailgate LEDs to form a 'right arrow' symbol or a 'left arrow' symbol or individual alphabets or words based on the signal from the control unit 108.

Further, the direction indicator 102 may comprise only the headlight 104 and the control unit 108. In such an embodiment, the control unit 108 generates the predefined sequence of illumination using the plurality of headlight LEDs only.

Furthermore, the direction indicator 102 may comprise only the tailgate 106 and the control unit 108. In such an embodiment, the control unit 108 generates the predefined sequence of illumination using the plurality of tailgate LEDs only.

In accordance with an embodiment of the invention, the plurality of tailgate LEDs and the plurality of headlight LEDs may be selected from an organic light-emitting diode (OLED) type or an active matrix organic light-emitting diode (AMOLED) type.

Figure 2 also depicts the second headlight 204 of the stationary vehicle 100. It may be apparent to any person skilled in the art that various permutations and combinations of the plurality of headlight LEDs, the plurality of tailgate LEDs, plurality of brake-light LEDs (not shown in figure) and plurality of turn-signal LEDs (not shown in figure) may be used for generating the predefined sequence of illumination of LEDs to direct oncoming traffic to a safe side of the vehicle.

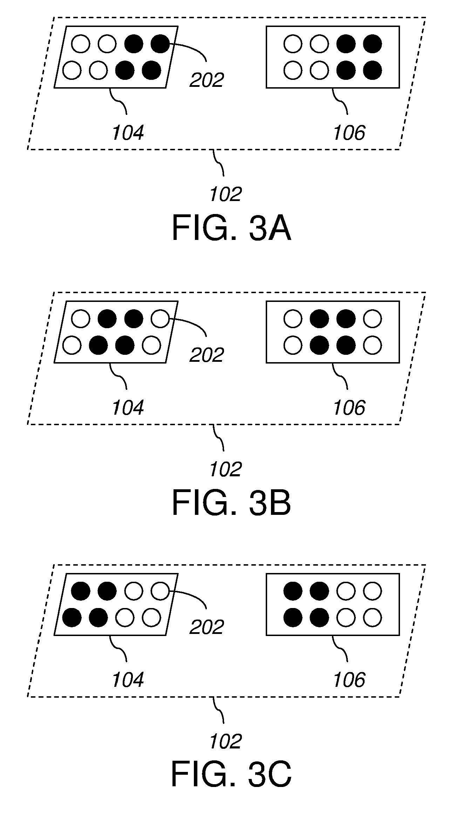

Figures 3A, 3B and 3C illustrate an exemplary predefined sequence of illumination of headlight LEDs and tailgate LEDs, in accordance with an embodiment of the invention. The control unit 108 generates a 'right-to-left' predefined sequence for the illumination of the headlight LEDs and tailgate LEDs, which is then used to direct oncoming traffic to a safe side of the vehicle. Accordingly, figs. 3A, 3B and 3C illustrate the exemplary predefined sequence for illuminating the headlight LEDs and tailgate LEDs in a right-to-left sequence to direct oncoming traffic to the left side of the vehicle. It may be apparent to any person skilled in the art that a 'left-to-right' predefined sequence may also be generated using the control unit 108.

The foregoing is a disclosure of an example practicing the present invention. However, it is apparent that direction indicator incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the claims. For instance, the LEDs could be arranged to light up in various colours, e.g. green on the side where it is safe to pass for another vehicle and red on the other side.

## Claims

1. A direction indicator (102) for a stationary vehicle (100), the direction indicator (102) comprising a combination of a headlight (104) and a tailgate (106) of the stationary vehicle, the headlight (104) comprising a plurality of LEDs, the tailgate (106) comprising a plurality of LEDs,
**characterised in**
**that** the plurality of headlight LEDs and the plurality of tailgate LEDs are illuminated in a predefined sequence for directing oncoming traffic to a safe side of the stationary vehicle.

2. A direction indicator (102) according to claim 1; wherein the direction indicator (102) is activated using a combination of a turn-signal switch and a warning-light switch in the stationary vehicle.

3. A direction indicator (102) according to claim 1; wherein the direction indicator (102) is activated using a separate switch provisioned in the stationary vehicle.

4. A direction indicator (102) according to any of the previous claims, wherein it further comprises a control unit (108), the control unit (108) being configured for controlling the operation of the plurality of tailgate LEDs and the plurality of headlight LEDs by generating the predefined sequence for the illumination of the plurality of tailgate LEDs and the plurality of headlight LEDs.

5. A direction indicator (102) according to claim 1; wherein the direction indicator (102) is manually activated by a passenger of the stationary vehicle.

6. A direction indicator (102) according to claim 1; wherein the direction indicator (102) is automatically activated in the event of a vehicular accident.

7. A direction indicator (102) according to any of the previous claims; wherein the tailgate LEDs are selected from one of an OLED type and an AMOLED type.

8. A direction indicator (102) according to any of the previous claims; wherein the headlight LEDs are selected from one of an OLED type and an AMOLED type.
